# EUROPEAN PATENT SPECIFICATION

(11) **EP 1 779 014 B1**
(45) Date of publication and mention of the grant of the patent: **30.12.2009**
(21) Application number: 04748802.8
(22) Date of filing: 21.07.2004
(51) Int. Cl.: F16L 5/04, F16L 5/10

(54) **PIPE SEALING DEVICE**
ROHRABDICHTUNGSVORRICHTUNG
DISPOSITIF D' ETANCHEITE POUR CANALISATION

(43) Date of publication of application: 02.05.2007
(73) Proprietor: Nilsen, Dagfinn R., 3221 Sandefjord (NO)
(72) Inventor: NILSEN, Mark, Ø., NL-2661 PK Bergschenhoek (NL)
(74) Representative: Stein, Jan Anders Lennart
(86) International application number: PCT/NO2004/000226
(87) International publication number: WO 2006/009454

(56) References cited:
- WO-A1-02/070939
- US-B1- 6 590 160

## Description

The present invention is related to a sealing device for pipes extending through walls and floors of different kinds, such as those known from WO02/070939.

Connections of the above type in many cases must be water tight and gas tight as well as fire proof and also ensure that the pipe is not damaged by installation or use.

In addition to the above mentioned objectives, the sealing device also should be easy to install and as few as possible different sealing device dimensions should be necessary to cover a large number of different pipe diameters in question.

The pipe sealing device according to the present invention satisfies the above mentioned objectives and is defined by the features stated in the claims.

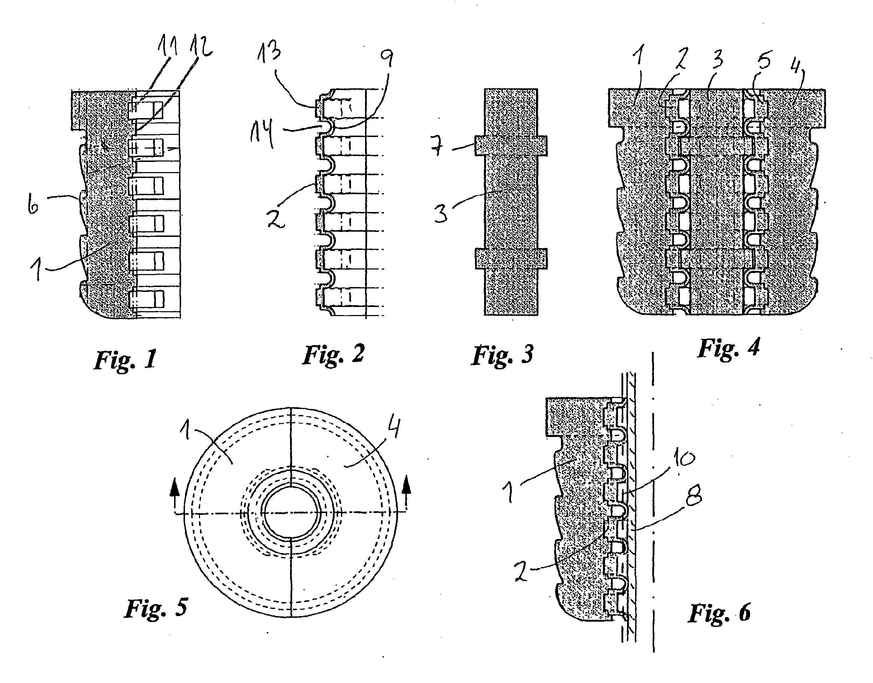

In the drawing figure 5 discloses a ground view of half of an outer segment, of which an axial section is disclosed in figure 1, figure 6 discloses a ground view of half of an inner insert of which an axial section is disclosed in figure 2, figure 7 discloses a ground view of a hollow member for surrounding a pipe, figure 3 discloses a side view of a centre plug, figure 4 discloses an axial section through an assembled device as delivered, figure 5 discloses a ground view of the assembled inventive device of figure 4 and figure 6 discloses an axial section of an outer, first segment and a second segment enclosing a pipe..

The device according to the present invention comprises two basic parts, an outer or first segment 1 comprising two half cylindrical members for insertion through holes in walls or floors, the outer surface of said first segments 1 comprising hooks 6 to secure the segment in the hole in the wall.

The interior of the first segments 1 are serrated corresponding with the outer surface of a second segment 2, comprising grooves 11 and rings 12. The outer surface of the second segments 2 also comprising rings 13 and grooves 14 adapted to fit with the grooves respectievely the rings 12 of the inner surface of the first segments 1. The inner surface of the grooves 14 of the second segments 2 being flexible arcs 9 extending inwardly. Said inner surface of second segments 2 being adapted also to receive beads 7 of an inner plug 3 between the arcs 9, adapted especially for transportation and delivery of an assembled unit comprising two first segments, two second segments and one plug 9.

All parts of first and second segments 1, 2 are identical halves, which can be arranged around a pipe 8 and around each other to fill up and seal between the pipe wall and the floor hole in the wall and/or floor.

Suitably the sealing device may be manufactured from hard synthetic flexible rubber compound, enabling tight pressure from the outermost circumference of the identical segment 1 to the wall in the hole, between the segments 1 and 2, as well as between the second segments 2 and the pip 8.

Depending on the diameter of the pipe and the diameter of the corresponding hole through the wall, a second segment 2 is selected to ensure adequate pressure between the second segment and the pipe 8. The second segments may be delivered in different sizes or thicknesses as to the inner diameter. In this way a small number first segments 1 combined with a small number of second segments 2 may be combined to a large variety of combinations.

The sealing device according to the invention is easily handled by placing two halves of the second segments around the pipe, further two identical halves of the serrated segments 2 and finally identical two halves of the outer segments 1, where after the outer segments 1 are forced into the hole in the wall and/or the floor, ensuring a sealed and gas tight connection, as well as establishing a fire proof connection.

For installation two identical second segments 2 of selected dimension according to the dimension of the pipe 8 through the wall are connected around the pipe and two first segments 1 are arranged around the second segments 2, the outer dimension of the first segments 1 being suitable to be forced into the hole through wall thereby completely closing the space between the pipe and the hole. In cases where the diameter of the pipe 8 is different, another dimension of the second segment 2 is selected.

Figure 6 discloses an outer segment 1, a second segment 2 and a pipe 8 to show the flexibility of the present invention as to covering pipes having different diameters. Second segments 2 comprise inwardly directed flexible arcs 9 abutting the entire surface of the pipe 8. Pipes having larger diameter such as disclosed with outer pipe diameter 10, will compress the arcs 9 in such a way that the same second segments 2 may be user for pipes 8 having different diameters. By means of the flexible arcs 9 a gap between the pipe 10 and the hole diameter can be covered by choosing an outer segment 1 having a relevant inner diameter and a second segment 2 having the same outer diameter but different inner diameters. From the inner diameters again the flexible arcs 9 cover each a diameter range.

A sealing device according to the present invention can be installed in a wall without any kind of mechanical tool. All holes and segments in this connection have circular cross sections. The device is simply pushed in the wall or floor by hand as the arcs 9 then will be pressed against the pipe and ensure tightness. The choice of the correct combination of outer and second segments is thereby of importance essential.

The sealing device according to the invention also may be used to plug holes not to be used or to be used later by installing two first segments 1, two second segments and one inner plug 3. The plug 3 may be provided with a flange at one end instead of the two beads 7 disclosed in figure 3.

## Claims

1. Sealing device for pipes extending through walls and floors of different kinds, **characterised in that** it comprises two identical outer segments (1) having outer hooks (6) to secure the segments (1) when pressed assembled through a hole in the wall or floor, and two identical second segments (2), occupying the annular space between the outer segments (1) and the pipe when assembled and abutting the pipe with inwardly extending flexible arcs (9) thereby covering several outer diameters of the pipe.

2. Sealing device according to the previous claim, **characterised in that** the second segments (2) comprise outer rings between grooves, the flexible arcs (9) bridging the grooves, the outer rings fitting into corresponding inner grooves in the outer segment 1.

## Patentansprüche

1. Dichtungseinrichtung für Rohre, welche sich durch Wände und Böden unterschiedlicher Arten erstrecken, **dadurch gekennzeichnet, dass** sie zwei identische äußere Segmente (1) aufweist, welche äußere Haken (6) haben, um die Segmente (1), wenn sie im zusammenmontierten Zustand durch ein Loch in der Wand oder in dem Boden hindurchgedrückt werden, zu sichern, und zwei identische zweite Segmente (2) aufweist, welche den ringförmigen Raum zwischen den äußeren Segmenten (1) und dem Rohr besetzen, wenn sie montiert sind und an dem Rohr mit sich nach innen erstreckenden flexiblen Bögen (9) anliegen und **dadurch** verschiedene äußere Durchmesser des Rohres abdecken.

2. Dichtungseinrichtung nach dem vorstehenden Anspruch, **dadurch gekennzeichnet, dass** die zweiten Segmente (2) äußere Ringe zwischen Nuten aufweisen, wobei die flexiblen Bögen (9) die Nuten überbrücken und die äußeren Ringe in entsprechende innere Nuten in dem äußeren Segment (1) hineinpassen.

## Revendications

1. Dispositif d'étanchéité pour des tuyaux s'étendant à travers des parois et des sols de différents types, **caractérisé en ce qu'**il comprend deux segments externes identiques (1) ayant des crochets externes (6) pour fixer les segments (1) lorsqu'ils sont comprimés par assemblage à travers un trou dans la paroi ou le sol, et deux seconds segments identiques (2), occupant l'espace annulaire entre les segments externes (1) et le tuyau lorsqu'ils sont assemblés et venant en butée contre le tuyau avec des arcs flexibles (9) s'étendant vers l'intérieur couvrant ainsi plusieurs diamètres externes du tuyau.

2. Dispositif d'étanchéité selon la revendication précédente, **caractérisé en ce que** les seconds segments (2) comprennent des bagues externes entre des rainures, les arcs flexibles (9) reliant les rainures, les bagues externes s'adaptant dans les rainures internes correspondantes dans le segment externe (1).
